# EUROPÄISCHE PATENTSCHRIFT

(11) **EP 1 861 445 B1**
(45) Veröffentlichungstag und Bekanntmachung des Hinweises auf die Patenterteilung: **23.07.2008**
(21) Anmeldenummer: 06724981.3
(22) Anmeldetag: 08.03.2006
(51) Int. Cl.: C08G 18/42, C08G 18/48, C08K 5/00, C09D 175/06, C09D 175/08, C08K 5/37

(54) **FOULINGRESISTENTE POLYURETHANE, INSBESONDERE FÜR MARITIME ANWENDUNGEN**
FOULING RESISTANT POLYURETHANES, IN PARTICULAR FOR MARITIME USE
POLYURETHANNES RESISTANT AUX SALISSURES, NOTAMMENT POUR DES APPLICATIONS MARITIMES

(30) Priorität: 14.03.2005 DE 102005011990
(43) Veröffentlichungstag der Anmeldung: 05.12.2007
(73) Patentinhaber: BASF SE, 67056 Ludwigshafen (DE)
(72) Erfinder: QUAISER, Stefan, 49401 Damme (DE); LYNAM, Ian, Ripley, derbyshire DE5855 (GB); WIND, Michael, 32689 Kalletal (DE); CELIK, Alexander, Hayk, Wymeswoid (GB); KAMPF, Gunnar, 32351 Stemwede-haldem (DE)
(86) Internationale Anmeldenummer: PCT/EP2006/060570
(87) Internationale Veröffentlichungsnummer: WO 2006/097425

(56) Entgegenhaltungen:
- EP-A- 0 746 979
- WO-A-00/50508
- US-A- 5 114 984
- US-A- 5 922 113
- KEVIN V. THOMAS, TIM W. FILEMAN, JAMES W. READMAN, MIKE J. WALDOCK: "Reports: Antifouling Paint Booster Biocides in the UK Coastal Environment and Potential Risks of Biological Effects" MARINE POLLUTION BULLETIN, Bd. 42, 2001, Seiten 677-688, XP002381016 GB

## Beschreibung

Die Erfindung betrifft Polyurethane, die Biozide enthalten, ein Verfahren ihrer Herstellung sowie deren Verwendung zur Herstellung von maritimen Gegenständen, die eine Antifoulingaktivität aufweisen.

Polyurethane werden seit langem zur Herstellung von Produkten verwendet, die in maritimen Regionen eingesetzt werden. Da diese Produkte zum Teil unterhalb der Wasseroberfläche eingesetzt werden, müssen die Polyurethane vor dem Bewuchs durch tierischen Hartbewuchs oder pflanzlichen Weichbewuchs geschützt werden. Dieser unerwünschte Bewuchs wird im Fachgebiet als "Fouling" bezeichnet. Ohne einen solchen Schutz erfolgt ein Bewuchs der Polymere, was zu einer Zerstörung des aus dem polymeren Werkstoff hergestellten Produkts, wie z. B. Bojen, Schwimmkörpern und Off-shore Rohren führen kann.

Ein Weg die polymeren Werkstoffe vor dem tierischen und pflanzlichen Bewuchs zu schützen, ist der Zusatz des Biozids Tributylzinn (TBT), welches jedoch toxikologisch bedenklich ist. So ist der Einsatz von TBT bereits EU-weit verboten.

Aus ökotoxikologischen und rechtlichen Gründen ist deswegen eine zinnfreie Methode zum Schutz vor dem Bewuchs der Werkstoffe nötig. Dieser Schutz wird heute meist durch so genannte Silicon foul-release Coatings erzeugt, was jedoch eine sehr aufwendige Technik darstellt, da vor dem Auftrag des Silicon foul-release Coatings die Oberfläche des polymeren Werkstoff aufwendig gereinigt werden muss und die in den Gewässern ausgesetzten Produkte in sehr kurzen Intervallen aufwendig von dem Bewuchs gesäubert werden müssen. Ein weiterer Nachteil der Verwendung der Silicon foul-release Coatings ist deren geringe Abriebsfestigkeit, wodurch die Oberfläche des Silicon foul-release Coatings beim Aussetzen der Produkte beschädigt werden kann und somit der Fouling-Befall begünstigt wird.

Aufgabe der vorliegenden Erfindung war es deshalb, Polyurethane bereitzustellen, die erstens ohne den Einsatz von Zinnverbindungen wirkungsvoll vor dem Fouling Befall geschützt sind, zweitens nicht vorstehend beschriebene Nachteile (z.B. aufwendige Reinigung) aufweisen und drittens keine negative Beinflussung der charakteristischen mechanischen Eigenschaften des polymeren Werkstoffs durch den Biozid-Einsatz zeigen.

Die Aufgabe konnte durch die Verwendung der im Folgenden näher beschriebenen chemischen Biozide, die entweder als alleiniges Additiv oder als Komponente einer Abmischung dem Polyurethan zugesetzt werden, gelöst werden.

Gegenstand der Erfindung ist daher ein Polyurethan, erhältlich durch Umsetzung von
a) Polyisocyanaten mit einer
b) einer Polyolkomponente, enthaltend Polyesterpolyole und/oder Polyetherpolyole, in Gegenwart eines
c) Biozids, enthaltend oder bestehend aus
   2-(Thiocyanomethylthio)benzothiazol.

Die erfindungsgemäßen Polyurethane sind bevorzugt foulingresistent. Unter einem foulingresistenten Polymer wird im Rahmen der Erfindung ein Polymer verstanden, das nach einer 6 monatigen Auslagerungen von Mai bis November in der Nordsee gemäss der ASTM Methode 6990-03 2004 ein Fouling Rating von größer oder gleich 40 aufweist. Das Fouling Rating der ASTM Norm 6990-03 2004 ist hierbei definiert als die vom Fouling unbewachsene Fläche des Polymeren in Prozent.

Die erfindungsgemäßen Polyurethane sind erhältlich durch Umsetzung von Polyisocyanaten (a) mit einer Polyolkomponenten (b), die Polyetherpolyole enthält, in Gegenwart eines Biozids (c).

Für die Komponenten (a) und (b) gilt folgendes:

Die verwendeten Polyisocyanate a) umfassen die üblichen aliphatischen, cycloaliphatischen und insbesondere aromatischen Di- und/oder Polyisocyanate. Bevorzugt verwendet werden Toluylendiisocyanat (TDI), Diphenylmethandiisocyanat (MDI) und Gemische aus Diphenylmethandiisocyanat und Polyphenylenpolymethylenpolyisocyanaten (Roh-MDI), insbesondere Diphenylmethandiisocyanat (MDI). Die Isocyanate können auch modifiziert sein, beispielsweise durch Einbau von Harnstoff-, Uretdion-, Carbamat-, Isocyanurat-, Carbodiimid-, Allophanat- und Urethangruppen. Insbesondere sind die Isocyanate mit Urethangruppen modifiziert, d.h. sie liegen in Form von Polyurethanprepolymeren vor. Diese Prepolymere sind erhältlich durch Umsetzung von Isocyanaten mit OH-funktionellen Verbindungen. Weiterhin können Abmischungen der verschiedenen Isocyanate Verwendung finden.

Die Polyolkomponente (b) umfasst Polyesterpolyole und/oder Polyetherpolyole, vorzugsweise Polyetherpolyole. Die bevorzugten Polyetherpolyole werden nach literaturbekannten Verfahren, beispielsweise durch anionische Polymerisation mit Alkalihydroxiden oder Alkalialkoholaten als Katalysatoren oder mit Hilfe von Doppelmetallcyanidkatalysatoren und unter Zusatz mindestens eines Startermoleküls, das reaktive Wasserstoffatome gebunden enthält, aus einem oder mehreren Alkylenoxiden mit 2 bis 4 Kohlenstoffatomen im Alkylenrest hergestellt. Geeignete Alkylenoxide sind beispielsweise Tetrahydrofuran, Ethylenoxid und 1,2-Propylenoxid. Die Alkylenoxide können einzeln, alternierend nacheinander oder als Mischungen verwendet werden.

Bevorzugt werden Mischungen aus 1,2-Propylenoxid und Ethylenoxid, wobei insbesondere das Ethylenoxid als Ethylenoxid-Endblock eingesetzt wird ("EO-cap"). In einer weiteren besonders bevorzugten Ausführungsform wird als Alkylenoxid nur 1,2-Propylenoxid verwendet.

In bevorzugten Ausführungsformen umfasst die Polyolkomponente (b) einen oder mehrere Bestandteile, ausgewählt aus den nachstehend beschriebenen Bestandteilen (b-1), (b-2), (b-3) und (b-4). Die Polyolseite beinhaltet hierbei die Komponente (b-1), die Komponenten (b-2), (b-3) und (b-4) sind optional und gegebenenfalls in der Polyolkomponente (b) enthalten.

Im Rahmen dieser Erfindung können bevorzugt Polyetherpolyole verwendet werden, die durch Alkoxylierung eines difunktionellen und/oder trifunktionellen Alkohols erhältlich sind. Die dadurch erhaltenen Polyetherpolyole werden im Rahmen dieser Erfindung als Bestandteil (b-1) bezeichnet.

Als difunktionelle Startermoleküle zur Herstellung von Polyetherolen kann beispielsweise Ethandiol, Propandiol-1,2 und -1,3, Diethylenglykol, Ethylenglykol, Dipropylenglykol, Propylenglykol, Butandiol-1,4 oder Hexandiol-1,6 oder Gemische davon verwendet werden.

Im allgemeinen wird die Alkoxylierung der difunktionellen Starter derart ausgeführt, dass das Polyetherol ein zahlenmittleres Molekulargewicht von 400 g/mol bis 8000 g/mol, bevorzugt, von 600 bis 7000 g/mol, besonders bevorzugt von 800 bis 6000 g/mol und insbesondere 900 bis 5000 g/mol aufweist.

Als trifunktionelle Startermoleküle zur Herstellung von Polyetherolen werden bevorzugt Glycerin, Trimethylolpropan oder-Gemische davon verwendet.

Im allgemeinen wird die Alkoxylierung des trifunktionellen Startermoleküls derart ausgeführt, dass das Polyetherol ein zahlenmittleres Molekulargewicht von 400 g/mol bis 12000 g/mol bevorzugt von 1000 bis 9000 g/mol, besonders bevorzugt von 1800 bis 8000 g/mol und insbesondere 2500 bis 7000 g/mol aufweist.

Ebenfalls ist es möglich, dass ein Gemisch aus difunktionellem und trifunktionellem Starter alkoxyliert wird.

Die Polyolkomponente (b) kann ferner als optionalen Bestandteil (b-2) ein Kettenverlängerungsmittel enthalten. Unter Kettenverlängerungsmittel versteht man im allgemeinen verzweigte oder unverzweigte Alkohole oder Amine, bevorzugt 2-wertige Alkohole, mit einem Molekulargewicht von weniger als 400 g/mol, bevorzugt weniger als 300 g/mol, insbesondere von 60 bis 250 g/mol. Beispiele hierfür sind Ethylenglykol, 1,6-Hexandiol, 1,5-Pentandiol, 1,4-Butandiol, 1,3-Propandiol, Diethylenglykol oder Dipropylenglykol.

Gegebenenfalls kann die Polyolkomponente als optionalen Bestandteil (b-3) ein Polyetherpolyol auf Basis eines vier- oder höherfunktionellen Startermoleküls beinhalten. Bevorzugt verwendet werden 4- bis 6-funktionelle Startermoleküle.

Beispiele für geeignete Startermoleküle sind Pentaerythrit, Sorbitol und Saccharose.

Im allgemeinen wird die Alkoxylierung der 4- bis 6-funktionelle Startermoleküle derart ausgeführt, dass das resultierende Polyetherpolyol ein zahlenmittleres Molekulargewicht von 200 g/mol bis 12000 g/mol bevorzugt von 4000 bis 9000 g/mol, besonders bevorzugt von 500 bis 5000 g/mol und insbesondere 600 bis 4000 g/mol aufweist.

Gegebenenfalls kann die Polyolkomponente als zusätzlichen Bestandteil (b-4) ein Öl auf Basis von Fettsäuren mit 6 bis 25 Kohlenstoffatomen, bevorzugt 10 bis 24 Kohlenstoffatomen, besonders bevorzugt 12 bis 22 Kohlenstoffatomen oder Derivate davon beinhalten. Als (b-4) können die aus dem Stand der Technik bekannten Öle auf Basis von Fettsäuren mit 6 bis 25 Kohlenstoffatomen verwendet werden, sofern sie verträglich mit der Polyurethan-Systemkomponenten sind.

Bevorzugt handelt es sich bei dem Öl um Triglyceride von Fettsäuren mit 6 bis 25 Kohlenstoffatomen oder Derivate davon. Besonders bevorzugt enthält das Öl neben den Triglyceriden von Fettsäuren mit 6 bis 25 Kohlenstoffatomen noch freies Glycerin. Im allgemeinen beträgt der freie Glyceringehalt 0,1 bis 20 Gew.%, bevorzugt 5 bis 15 Gew.%, insbesondere 7 bis 12 Gew.%, bezogen auf das Gesamtgewicht des Öls.

Beispiele für geeignete Säuren, sind Capronsäure, Caprylsäure, Caprinsäure, Laurinsäure, Myristinsäure, Palmitinsäure, Stearinsäure, Arachidinsäure, Behensäure, Lignocerinsäure, Lauroleinsäure, Myristoleinsäure, Palmitoleinsäure, Ölsäure, Gadoleinsäure, Erucasäure, Ricinolsäure, Linolsäure und Linolensäure. Die Säuren können einzeln oder im Gemisch verwendet werden. Bevorzugt werden Palmitinsäure, Stearinsäure, Ölsäure, Ricinolsäure, Linolsäure und Linolensäure verwendet. Besonders bevorzugt wird Ricinolsäure verwendet.

Bei den einzusetzenden Ölen kann es sich um synthetische oder natürliche Öle handeln. Besonders bevorzugt wird als optionaler Bestandteil (b-4) Ricinusöl verwendet.

Die Öle (b-4) können als solche oder in Form von Derivaten eingesetzt werden. Unter Derivate werden hierbei die aus dem Stand der Technik bekannten Stoffe verstanden, die durch Modifizierung der Öle erhältlich sind. Beispiele für Modifizierungen sind Umwandlungen an den Doppelbindungen, z.B. durch Hitzepolymerisation, Isomeriesierung, Dehydratation bzw. Addition oder Substitution an den Doppelbindungen, wie zum Beispiel einer Epoxidierung der CC-Doppelbindung mit anschliessendem Epoxidringaufbruch und Alkoxylierung der so dargestellten OH-Gruppierungen, oder Umwandlung des Glycerid-Systems, z.B. durch Umesterung.

Als bevorzugt verwendetes Derivat wird Ricinenöl, welches durch Dehydratation von Ricinusöl erhältlich ist, zum Einsatz als optionaler Bestandteil (b-4) verwendet.

Gegebenenfalls können der Polyolkomponente noch Zusatzstoffe zugesetzt werden. Hier seien beispielsweise genannt Katalysatoren (Verbindungen, welche die Reaktion der Isocyanatkomponente mit der Polyolkomponente beschleunigen), oberflächenaktive Substanzen, Entschäumer, Entlüfter, Verlaufsmittel, Farbstoffe, Pigmente, Hydrolyseschutzstabilisatoren, Oxidationsschutzmittel, Weichmacher sowie UV-Schutzmittel.

Des weiteren kann die Polyolkomponente thixotropierende Additive, wie beispielsweise Laromin^{®} C 260 (Di-methyl-methylen-Bis-Cyclohexylamin) enthalten. Im allgemeinen liegt die eingesetzte Menge dieser Additive zwischen 0,1 und 3 Gewichtsteilen, bezogen auf 100 Gewichtsteile der Polyol-Komponente.

Ferner ist es möglich, der Polyolkomponente b) die aus dem Stand der Technik bekannten Treibmittel zuzusetzen. Es ist jedoch bevorzugt, dass die Isocyanatkomponente und die Polyolkomponente kein physikalisches und kein chemisches Treibmittel enthält. Ferner ist bevorzugt, dass diesen Komponenten kein Wasser zugesetzt wird. Somit enthalten die Komponenten a) und b) besonders bevorzugt kein Treibmittel, abgesehen von Restwasser, welches in technisch hergestellten Polyolen enthalten ist.

Ferner ist es besonders bevorzugt, wenn der Restwassergehalt durch Zusatz von Wasserfängern reduziert wird. Als Wasserfänger sind beispielsweise Zeolithe geeignet. Die Wasserfänger werden beispielsweise in einer Menge von 0,1 bis 10 Gew.%, bezogen auf das Gesamtgewicht der Polyolkomponente b), eingesetzt.

In einer ersten bevorzugten Ausführungsform enthält die Polyolkomponente (b) folgende Mengen an den Bestandteilen (b-1) bis (b-4):
50 bis 100 Gew.-%, bevorzugt 85 bis 95 Gew.-% (b-1),
0 bis 30 Gew.%, bevorzugt 5 bis 15 Gew.-% (b-2),
0 bis 20 Gew.-%, bevorzugt 0 Gew.-% (b-3) und
0 bis 20 Gew.-%, bevorzugt 0 Gew.-% (b-4),
bezogen auf das Gesamtgewicht der Komponenten (b-1) bis (b-4).

In dieser Ausführungsform werden die beschriebene Polyolkomponenten bevorzugt mit 4,4'-MDI oder einem Prepolymer auf Basis von 4,4'-MDI umgesetzt. Bevorzugt sind dadurch elastomere Polyurethane, insbesondere kaltgießelastomere Polyurethane erhältlich.

Die in dieser ersten Ausführungsform erhaltenen Polyurethane weisen im allgemeinen eine Dichte von 0,8 kg/l bis 1,3 kg/l, bevorzugt von 0,9 kg/l bis 1,1 kg/l. auf.

Die durch diese erste bevorzugte Ausführungsform erhaltenen Polyurethane werden bevorzugt zur Beschichtung von off-shore Rohren und Schwimmkörper wie z.B. Bojen verwendet.

In einer zweiten bevorzugten Ausführungsform enthält die Polyolkomponente (b) folgende Mengen an den Bestandteilen (b-1) bis (b-4):
10 bis 100 Gew.-%, bevorzugt 30 bis 80 Gew.-% (b-1),
0 bis 30 Gew.-%, bevorzugt 0 bis 10 Gew.-% (b-2),
0 bis 20 Gew.-%, bevorzugt 1 bis 5 Gew.-% (b-3) und
0 bis 80 Gew.-%, bevorzugt 20 bis 50 Gew.-% (b-4),
bezogen auf das Gesamtgewicht der Komponenten (b-1) bis (b-4).

In dieser Ausführungsform werden die beschriebene Polyolkomponenten bevorzugt mit einem vorstehend beschriebenen Gemisch aus Diphenylmethandiisocyanat und Polyphenylenpolymethylenpolyisocyanaten umgesetzt.

Bevorzugt wird diese zweite bevorzugte Ausführungsform in Gegenwart der nachstehend beschriebenen Mikrohohlkugeln (Komponenten (d)) umgesetzt. Dadurch sind sogenannten "syntaktische Polyurethane" erhältlich. Diese syntaktischen Polyurethane weisen im allgemeinen eine Dichte von 0,3 kg/l bis 0,9 kg/l, bevorzugt von 0,5 kg/l bis 0,8 kg/l. auf.

Die durch diese zweite bevorzugte Ausführungsform erhaltenen Polyurethane werden bevorzugt zur Herstellung, insbesondere zur Isolierung, von Off-Shore-Rohren, Muffen, und Rohrsammlern verwendet.

Die erfindungsgemäßen Polyurethane sind durch Umsetzung der Komponenten (a) und (b) in Gegenwart eines Biozid oder mehrere Biozide, ausgewählt aus den Bioziden (i) bis (vi) erhältlich.

Für das Biozide gilt folgendes:

In einer bevorzugten Ausführungsform enthält das erfindungsgemäße Polymer 2-(Thiocyanomethylthio)benzothiazol, das durch nachstehende Strukturformel beschrieben wird:

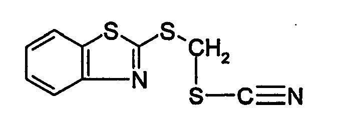

In einer bevorzugten Ausführungsform ist die Komponente (c) :
2-(Thiocyanomethylthio)benzothiazol.

Die Menge an eingesetzten Biozid (c) beträgt im allgemeinen von 0,1 bis 20 Gewichts-prozent, bevorzugt 0,2 bis 10 Prozent, mehr bevorzugt 0,3 bis 7 Prozent, noch mehr bevorzugt 0,4 bis 6 Prozent, besonders bevorzugt 0,5 bis 5 Prozent und insbesondere 0,6 bis 3,5 Prozent bezogen auf das Gesamtgewicht des Polyurethans.

Ferner können der Reaktionsmischung aus den Komponenten (a) und (b) und (c) Mikrohohlkugeln (d) zugesetzt werden. Unter dem Begriff Mikrohohlkugel sind organische und mineralische Hohlkugeln zu verstehen. Als organische Hohlkugeln können beispielsweise Kunststoffhohlkugeln, z.B. aus Polyethylen, Polypropylen, Polyurethan, Polystyrol oder einem Gemisch daraus, eingesetzt werden. Die mineralischen Hohlkugeln können beispielsweise Ton, Aluminiumsilikat, Glas oder Gemische daraus enthalten.

Die Hohlkugeln können im Inneren ein Vakuum oder Teilvakuum aufweisen oder mit Luft, Inertgasen, beispielsweise Stickstoff, Helium oder Argon, oder Reaktivgasen, beispielsweise Sauerstoff, gefüllt sein.

Üblicherweise weisen die organischen oder mineralischen Hohlkugeln einen Durchmesser von 1 bis 1000 µm, bevorzugt von 5 bis 200 µm auf. Üblicherweises weisen die organischen oder mineralischen Hohlkugeln eine Schüttdichte von 0,1 bis 0,4 g/cm³ auf. Sie besitzen im allgemeinen eine Wärmeleitfähigkeit von 0,03 bis 0,12 W/mK.

Bevorzugt werden als Mikrohohlkugeln Mikroglashohlkugeln verwendet. In einer besonders bevorzugten Ausführungsform weisen die Mikroglashohlkugeln eine hydrostatische Druckfestigkeit von mindestens 20 bar auf. Beispielsweise können als Mikrohohlglaskugeln 3M - Scotchlite^{®} Glass Bubbles verwendet werden.

Die Mikrohohlkugeln werden im allgemeinen in einer Menge von 1 bis 80 Gew.-%, bevorzugt von 2 bis 50, mehr bevorzugt von 5 bis 35 Gew.-% und besonders bevorzugt von 10 bis 30 Gew.%, bezogen auf das Gesamtgewicht des resultierenden Polyurethans, zugegeben.

Gegenstand der Erfindung ist ferner ein Verfahren zur Herstellung eines Polyurethans durch Umsetzung von
a) Polyisocyanaten mit
b) einer Polyolkomponente, enthaltend Polyetherpolyole, in Gegenwart eines Biozids (c), enthaltend oder bestehend aus :
   2-(Thiocyanomethylthio)benzothiazol.

Für die verwendeten Komponenten a) bis c) wird hier auf vorstehende Ausführungen verwiesen: Ebenso gilt dies für die vorstehend beschriebenen Zusatzstoffe.

Zur Herstellung der Polyurethane werden die Polyisocyanate a) Polyolkomponente und b) in solchen Mengen zur Umsetzung gebracht, dass das Äquivalenzverhältnis von NCO-Gruppen der Polyisocyanate a) zur Summe der reaktiven Wasserstoffatome der Komponente b) 1 : 0,5 bis 1 : 3,50 (entsprechend einem Isocyanatindex von 50 bis 350), vorzugsweise 1 : 0,85 bis 1 : 1,30 und besonders bevorzugt von 1 : 0,9 bis 1 : 1,15 beträgt.

Die Ausgangskomponenten werden üblicherweise bei einer Temperatur von 0°C bis 100°C, bevorzugt 15 bis 60°C gemischt und zur Reaktion gebracht. Die Vermischung kann mit den üblichen PUR-Verarbeitungsmaschinen erfolgen. In einer bevorzugten Ausführungsform erfolgt die Vermischung durch Niederdruckmaschinen oder Hochdruckmaschinen.

Die Einbringung des Biozids (c) kann durch vorheriges Vermischen von (c) mit der Komponente (a) und/oder (b) erfolgen. Ebenfalls kann (c) zum reagierenden Umsetzungsgemisch aus (a) und (b) gegeben werden. Bevorzugt wird (c) zuerst mit der Polyolkomponente (b) vermischt und anschließend wird das Gemisch aus (b) und (c) mit (a) umgesetzt.

Die optionale Einarbeitung der Mikrohohlkugeln d) in die PUR-Komponenten erfolgt nach aus dem Stand der Technik bekannten Methoden. Es ist möglich, die Mikrohohlkugeln vor der Umsetzung mindestens einer der Komponenten a) oder b) zuzugeben und/oder die Mikrohohlkugeln unmittelbar nach Umsetzung der Komponenten a) und b) dem noch reagierenden Umsetzungsgemisch zuzugeben. Beispiele für geeignete Vermischungsverfahren sind in WO 94/20286, WO 02/102887 und WO 02/072701 beschrieben. Bevorzugt wird nach der Mischtopfmethode gemäß WO 02/102887 verfahren.

Weiterhin ist Gegenstand der Erfindung die Verwendung eines Biozids (c), zur Herstellung von maritimen Gegenständen enthaltend Polyurethane gemäß Anspruch 1.

Unter maritimen Gegenstände sind Gegenstände zu verstehen, die bei bestimmungsgemäßen Gebrauch in ständigen Kontakt mit Meerwasser stehen. Beispiele für maritime Gegenstände sind Off-Shore-Rohre, Muffen, Rohrsammler, Pumpen und Schwimmkörper, wie z.B. Bojen.

Unter Off-Shore Rohr wird im Rahmen dieser Erfindung ein Rohr verstanden, welches zur Förderung von Öl und Gas dient. Das Öl/ Gas strömt im allgemeinen hierin vom Meeresboden auf Plattformen, in Schiffe/ Tanker oder auch direkt an Land.

Unter Muffen sind die Verbindungen von zwei Rohren oder Rohrteilen zu verstehen.

Gegenstand der Erfindung ist somit maritimer Gegenstand, enthaltend die erfindungsgemäßen Polyurethane.

Gegenstand der Erfindung ist insbesondere ein Off-Shore-Rohr, aufgebaut aus
(i) einem innerem Rohr daran haftend angebracht
(ii) eine Schicht aus erfindungsgemäßen Polyurethan.

Eine alternative Ausführungsform des erfindungsgemäßen Off-Shore-Rohres umfasst
(i) ein inneres Rohr, bevorzugt ein Metallrohr, darauf angebracht
(ii) eine Schicht Isoliermaterial, bevorzugt Schaumstoff, und darauf angebracht
(iii) eine Schicht aus erfindungsgemäßen Polyurethan, bevorzugt eine Coatingschicht aus kompakten erfindungsgemäßen Polyurethan.

Ebenfalls ist Gegenstand der Erfindung eine Boje, beschichtet mit erfindungsgemäßen Polyurethan.

Die Erfindung soll durch nachstehende Beispiele veranschaulicht werden.

### Beispiele

Folgende Komponenten wurden in den Beispielen verwendet:
- Elastomersystem:: Elasturan^{®} 6006/105/A80 (Hersteller: Elastogran GmbH)
- Biozid 1:: Tributylzinnoxid (TBT)
- Biozid 2:: 3-Benzo[b]thien-2-yl-5,6-dihydro-1,4,2-oxathiazin-4-oxid
- Biozid 3:: 2-p-(Chlorophenyl)-3-cyano-4-bromo-5-trifluoromethyl-pyrrol
- Biozid 4:: 2-(Thiocyanomethylthio)benzothiazol
- Biozid 5:: Tetrahydro-N-(trichloromethylthio)phtalimid
- Biozid 6:: Bis(1-Hydroxy-1H-pyridine-2-thionato-O,S)kupfer
- Biozid 7:: Bis(1-Hydroxy-1H-pyridine-2-thionato-O,S)zink.

Aus dem angegebenen Polyurethansystem wurden unter Zusatz der Biozide mit Polyurethanelastomeren beschichtete, runde Petrischalen von einem Durchmesser von 9 cm hergestellt. Diese wurden mit Seewasser überschichtet, ca. 50 Seepockenlarven hinzu gegeben und für einen Zeitraum von 5 bis 7 Tagen bei einer Temperatur von 27 ± 2°C und definierten Lichtverhältnissen (15 h Lichteinfall und 9 h Dunkelheit pro Tag) inkubiert. Nach der Inkubation wird die Anzahl der auf dem polymeren Werkstoff angesiedelten Seepockenlarven mit Hilfe eines Mikroskops bestimmt. Das prozentuale Verhältnis der angesiedelten Seepockenlarven zu der Anzahl der dem System zugefügten Larven ist in der Tabelle 1 als Ansiedlung-% beschrieben.

Aus dem angegebenen Polyurethansystem wurden Polyurethan Elastomere unter Zusatz der bioziden Verbindungen bzw. unter Zusatz von Biozidmischungen hergestellt und Prüfplatten von 10 cm * 10 cm Kantenlänge aus diesen hergestellt. Die so hergestellten Prüfplatten wurden in der Nordsee im Zeitraum von Mai bis November 2004 wenige Zentimeter unterhalb der Wasseroberfläche im Hafenbecken von Norderney ausgesetzt und der Bewuchs der Platten in Anlehnung an die ASTM Methode 6990-03 2004 ermittelt. Hierbei wird der prozentuale Anteil der nicht bewachsenen Fläche der Prüfplatten ermittelt und ist als "fouling Rating" in der nachfolgenden Tabelle erwähnt. Zusätzlich wurde das Trockengewicht des Bewuchses auf den Prüfplatten gravimetrisch bestimmt. Hierfür wird der Bewuchs von der Prüfplatte gekratzt, bei 60°C getrocknet und gewogen. Die im folgenden als "Fouling Gewicht" angegebene Größe ist die Masse des Bewuchses bezogen auf die Fläche der Prüfplatte. Ferner erfolgte eine Quantifizierung des tierischen Bewuchs der Prüfplatten, in dem der prozentuale Teil der durch das tierische Hartfouling bedeckten Fläche der Prüfplatten ermittelt wurde, in der Tabelle ist der prozentuale Anteil des nicht durch tierisches Hartfouling bedeckten Bereichs als Hartfouling-Rating bezeichnet.

Zusätzlich wurde die Shore A Härte gemäss DIN 53505, die Zugfestigkeit und die Spannung bei 100 % sowie 300% Dehnung gemäss ASTM D412 sowie die Weiterreißfestigkeit gemäss ASTM D624 bestimmt. Diese Daten sind in der Tabelle 3 zusammengefasst.

In der nachfolgenden Tabelle ist jeweils die Konzentration der verwendeten Biozide in Massen-Prozent bezogen auf das Gesamtgewicht des Polyurethan-Elastomers angegeben.

**Tabelle 1**

| | | | | | | | | |
|---|---|---|---|---|---|---|---|---|
| Bestimmung des prozentualen Verhältnises der angesiedelten Seepockenlarven zu der Anzahl der dem System zugefügten Larven (Ansiedlung-%), gemäss des beschriebenen Ansiedlungstests. | | | | | | | | |
| Bei den Beispielen 1-4 und 6-8 handelt es sich um Vergleichsbeispiele. | | | | | | | | |

| | Bsp. 1 | Bsp. 2 | Bsp. 3 | Bsp. 4 | Bsp. 5 | Bsp. 6 | Bsp. 7 | Bsp. 8 |
|---|---|---|---|---|---|---|---|---|
| | | | | | | | | |
| Biozid 1 | | 0,07 | | | | | | |
| Biozid 2 | | | 0,07 | 0,035 | | | | |
| Biozid 3 | | | | 0,035 | | | | |
| Biozid 4 | | | | | 0,07 | | | |
| Biozid 5 | | | | | | 0,07 | | |
| Biozid 6 | | | | | | | 0,07 | |
| Biozid 7 | | | | | | | | 0,07 |
| | | | | | | | | |
| Ansiedlung-% | 85,1 | 2,3 | 0,0 | 0,0 | 0,0 | 12,7 | 0,0 | 4,6 |

**Tabelle 2**

| | | | | | |
|---|---|---|---|---|---|
| Auswertung des Fouling Bewuchses auf Prüfplatten, die in dem Zeitraum von Mai bis November 2004 in der Nordsee kurz unter der Wasseroberfläche ausgesetzt waren. Das Fouling Rating wie auch das Hardfouling rating und das Fouling Gewicht ist wie vorne beschrieben bestimmt worden. | | | | | |
| Bei den Beispielen 9-11 und 13 handelt es sich um Vergleichsbeispiele. | | | | | |

| | Beispiel 9 | Beispiel 10 | Beispiel 11 | Beispiel 12 | Beispiel 13 |
|---|---|---|---|---|---|
| | | | | | |
| Biozid 1 | | 0,7 | | | |
| Biozid 2 | | | 0,7 | | |
| Biozid 3 | | | 0,7 | | |
| Biozid 4 | | | | 0,7 | |
| Biozid 5 | | | | | 0,7 |
| | | | | | |
| Fouling rating nach 5 Monaten | 34 | 99 | 90 | 94 | 70 |
| Fouling rating nach 6 Monaten | 1 | 99 | 87 | 59 | 42 |
| Hardfouling rating nach 6 Monaten | 12 | 99 | 88 | 89 | 46 |
| Fouling Gewicht [g] nach 6 Monaten | 60, 83 | 2,14 | 16,34 | 11,83 | 28,49 |

Die Wirksamkeit der erfindungsgemäßen Biozide ist aus den Tabellen 1 und 2 ersichtlich.

**Tabelle 3**

| | | | | | | | | |
|---|---|---|---|---|---|---|---|---|
| Vergleich der Shore A Härte gemäss DIN 53505, der Zugfestigkeit und der Spannung bei 100 % sowie 300 % Dehnung gemäss ASTM D412 sowie der Weiterreißfestigkeit gemäss ASTM D624. | | | | | | | | |
| Bei den Beispielen 14-17 und 19-21 handelt es sich um Vergleichsbeispiele. | | | | | | | | |

| | Bsp. 14 | Bsp. 15 | Bsp. 16 | Bsp. 17 | Bsp. 18 | Bsp. 19 | Bsp. 20 | Bsp. 21 |
|---|---|---|---|---|---|---|---|---|
| | | | | | | | | |
| Biozid 1 | | 0,7 | | | | | | |
| Biozid 2 | | | 0,7 | 0,35 | | | | |
| Biozid 3 | | | | 0,35 | | | | |
| Biozid 4 | | | | | 0,7 | | | |
| Biozid 5 | | | | | | 0,7 | | |
| Biozid 6 | | | | | | | 0,7 | |
| Biozid 7 | | | | | | | | 0,7 |

| | | | | | | | | |
|---|---|---|---|---|---|---|---|---|
| Shore A Härte | 76 | 73 | 75 | 75 | 72 | 72 | 76 | 75 |
| Zugfestigkeit [MPa] | 9 | 9 | 8 | 8 | 8 | 8 | 8 | 8 |
| Spannung bei 100% Dehnung [MPa] | 4,2 | 4,4 | 4,1 | 4,5 | 4,1 | 4,1 | 4,2 | 4,2 |
| Spannung bei 300% Dehnung [MPa] | 7,5 | 7,6 | 7,2 | 7,8 | 7,3 | 7,3 | 7,2 | 7,6 |
| Weiterreißfestigkeit [N/mm] | 52 | 50 | 50 | 70 | 47 | 49 | 48 | 48 |

Man erkennt, dass die mechanischen Daten nur unwesentlich durch den Zusatz der Biozide beeinflusst werden.

## Patentansprüche

1. Polyurethan, erhältlich durch Umsetzung von (a) Poylisocyanaten mit b) einer Polyolkomponente, enthaltend Polyesterpolyole und/oder Polyetherpolyole, in Gegenwart eines Biozids (c), enthaltend oder bestehend aus 2-(Thiocyanomethylthio)benzothiazol.

2. Polyurethan nach Anspruch 1, **dadurch gekennzeichnet, dass** das Biozid (c) in einer Menge von 0,1 bis 20 Gewichts-Prozent, bezogen auf das Gesamtgewicht des Polyurethans, eingesetzt wird.

3. Polyurethan nach Anspruch 1 oder 2, **dadurch gekennzeichnet, dass** das Biozid (c) in einer Menge von 0,6 bis 3,5 Gewichts-Prozent, bezogen auf das Gesamtgewicht des Polyurethans, eingesetzt wird.

4. Polyurethan nach einem der Ansprüche 1 bis 3, **dadurch gekennzeichnet, dass** die Polyetherpolyole durch Alkoxylierung eines di- oder trifunktionellen Alkohols erhältlich sind.

5. Polyurethan nach einem der Ansprüche 1 bis 4, **dadurch gekennzeichnet, dass** es sich um ein kaltgießelastomeres Polyurethan handelt.

6. Polyurethan nach einem der Ansprüche 1 bis 4, **dadurch gekennzeichnet, dass** es sich um Mikrohohlkugeln (d) enthaltende Polyurethane handelt.

7. Verfahren zur Herstellung eines Polyurethans durch Umsetzung von a) Polyisocyanaten mit b)einer Polyolkomponente, enthaltend Polyetherpolyole, in Gegenwart eines Biozids (c), enthaltend oder bestehend aus 2-(Thiocyanomethylthio)benzothiazol.

8. Martime Gegenstände, enthaltend Polyurethane nach einem der Ansprüche 1 bis 6.

9. Gegenstand nach Anspruch 8, **dadurch gekennzeichnet, dass** es sich Off-Shore-Rohre, Muffen, Rohrsammler, Pumpen und/oder Schwimmkörper handelt.

## Claims

1. A polyurethane obtainable by reacting a) polyisocyanates with b) a polyol component comprising polyesterpolyols and/or polyetherpolyols, in the presence of a biocide (c) comprising or consisting of 2-(thiocyanomethylthio)benzothiazole.

2. The polyurethane according to claim 1, wherein the biocide (c) is used in an amount of from 0.1 to 20 percent by weight, based on the total weight of the polyurethane.

3. The polyurethane according to claim 1 or 2, wherein the biocide (c) is used in an amount of from 0.6 to 3.5 percent by weight, based on the total weight of the polyurethane.

4. The polyurethane according to any of claims 1 to 3, wherein the polyetherpolyols are obtainable by alkoxylation of a di- or trifunctional alcohol.

5. The polyurethane according to any of claims 1 to 4, which is a cold-cast polyurethane elastomer.

6. The polyurethane according to any of claims 1 to 4, which is a polyurethane comprising hollow microspheres (d).

7. A process for the preparation of a polyurethane by reacting a) polyisocyanates with b) a polyol component comprising polyetherpolyols, in the presence of a biocide (c) comprising or consisting of 2-(thiocyanomethylthio)benzothiazole.

8. A maritime article comprising a polyurethane according to any of claims 1 to 6.

9. The article according to claim 8, which is an offshore pipe, socket, pipe manifold, pump and/or float.

## Revendications

1. Polyuréthanne, pouvant être obtenu par réaction de (a) des polyisocyanates avec b) un composant polyol, contenant des polyester-polyols et/ou des polyéther-polyols, en présence d'un biocide (c), contenant ou consistant en le 2-(thiocyanométhylthio)benzothiazole.

2. Polyuréthanne selon la revendication 1, **caractérisé en ce que** le biocide (c) est mis en oeuvre en une quantité allant de 0,1 à 20 % en poids, sur la base du poids total du polyuréthanne.

3. Polyuréthanne selon la revendication 1 ou 2, **caractérisé en ce que** le biocide (c) est mis en oeuvre en une quantité allant de 0,6 à 3,5 % en poids, sur la base du poids total du polyuréthanne.

4. Polyuréthanne selon l'une des revendications 1 à 3, **caractérisé en ce que** les polyéther-polyols peuvent être obtenus par alcoxylation d'un alcool di- ou trifonctionnel.

5. Polyuréthanne selon l'une des revendications 1 à 4, **caractérisé en ce qu'**il consiste en un polyuréthanne élastomère de coulée à froid.

6. Polyuréthanne selon l'une des revendications 1 à 4, **caractérisé en ce qu'**il consiste en des polyuréthannes contenant des microbilles (d).

7. Procédé de préparation d'un polyuréthanne, par réaction de (a) des polyisocyanates avec b) un composant polyol, contenant des polyéther-polyols, en présence d'un biocide (c), contenant ou consistant en le 2-(thiocyanométhylthio)benzothiazole.

8. Objet maritime, contenant le polyuréthanne selon l'une des revendications 1 à 6.

9. Objet selon la revendication 8, **caractérisé en ce qu'**il consiste en des tubes off-shore, des manchons, des collecteurs de tubes, des pompes et/ou des flotteurs.
